# EUROPEAN PATENT APPLICATION

(11) **EP 4 749 849 A1**
(43) Date of publication of application: **27.05.2026**
(21) Application number: 24215262.7
(22) Date of filing: 25.11.2024
(51) Int. Cl.: H02B 13/045, H02G 5/06, F16L 23/18

(54) **GAS-INSULATED ELECTRICAL APPLICATION AND USE**

(71) Applicant: Hitachi Energy Ltd, 8050 Zürich (CH)
(72) Inventor: Chauhan, Kalpesh, 390020 Sayajigunj (IN); Macedo, Felipe, 8134 Adliswil (CH); Redasani, Chetan, 390004 Vadodara (IN); Keller, Markus M., 8406 Winterthur (CH); Wegmann, Jonas, 8472 Seuzach (CH)
(74) Representative: Michalski Hüttermann & Partner Patentanwälte mbB

(57) **Abstract**

The invention relates to a gas-insulated electrical application (1), particularly gas-insulated switchgear or gas-insulated line, comprising
two flanges (10, 12) connected to each other in a connection region (14),
an insulator (30) with an annular base (32) arranged in the connection region (14) to be held by the two flanges (10, 12), and
a sealing ring (50) arranged with a first side (51) in a groove (34) of the annular base (32) and configured for sealing with a second side (52) against one of the two flanges (10, 12), wherein
the sealing ring (50) comprises a recess (54) on at least one of the first side (51) and the second side (52), and/or
the groove (34) comprises stepped edges (36, 38) of which a radially outwards stepped edge (38) is wider in a radial direction than a radially inwards stepped edge (36).

## Description

### Technical Field

The disclosure relates to a gas-insulated electrical application and to a use.

### Background Art

Gas-insulated electrical applications typically contain insulating gas in the vicinity of parts carrying electricity. Such gas is, for example, kept in a closed volume or circuit inside the application. Over the time, for example due to material ageing and/or corrosion, leaks may occur which cause insulating gas to leave the application. Thus, it is of interest to keep the gas-insulated electrical applications sealed for a long lifetime. It is also of interest to provide an application that is more leak-proof.

### Summary of invention

It is therefore an object to provide solutions with respect to gas-insulated electrical applications in order to enhance lifetime, cost of operation and cost of repair. Particularly it is an object to avoid or reduce disadvantages of known solutions.

The objects are solved by the features of the independent claims. Preferred implementations are detailed in the dependent claims, the description and the figures.

The objects are particularly solved by a gas-insulated electrical application, comprising
two flanges connected to each other in a connection region,
an insulator with an annular base arranged in the connection region to be held, particularly held or supported, by the two flanges, and
a sealing ring arranged with a first side in a groove of the annular base and configured for sealing with a second side against one of the two flanges.

The sealing ring may comprise a recess on at least one or on each of the first side and the second side.

Alternatively or additionally, the groove may comprise stepped edges of which a radially outwards stepped edge is wider in a radial direction than a radially inwards stepped edge.

In other words, particularly, a gas-insulated electrical equipment is suggested where a flange connection that holds an insulator with a ring gasket (the sealing ring) in a ring-shaped trench (the groove) of the insulator is improved. Particularly, the sealing ring may be recessed in an annular manner on one side or on two sides and/or the groove may have stepped, recessed or graduated upper edges with an annular form, with an outside edge being wider than an inside edge.

The invention may provide improval with respect to the risk of leakage. Seal aging from material degradation may be slowed. Seal permeation of gas through the sealing ring may be reduced. Stability of the seal may be increased.

The recess of the sealing ring can provide that the area of contact of sealing ring on the flange and/or the insulator is increased in comparison, for example, to a standard O-Ring with a round cross section; this can lower the risk for leakage. The recess may reduce material stress inside the sealing ring upon compressing the sealing ring which may reduce the speed of material aging or decomposition.

The stepped edges can provide that the material stress inside the sealing ring upon compressing the sealing ring may be reduced which may reduce the speed of material aging or decomposition. Upon providing that the radially outwards stepped edge is wider, more space for the sealing ring to expand into is provided relative to the radially inwards stepped edge. This design can cause that less material needs to be removed on a radial inside of the annular base relative to the radial outside so that the insulator may be kept structurally more rigid.

The invention may be adopted in existing gas-insulated electrical applications by replacing an insulator and/or a sealing ring thereof.

The described details, advantages and effects may be further improved by means of one or more of further preferred features as described herein.

The invention has found that that a lot of gas-insulated electrical applications or utilities may face problems with gas leakages over the time, especially at flanges, e.g. those flanges comprised by gas-insulated switchgear (GIS) or gas-insulated lines (GIL) on their installed base. The invention proposes a novel design for the sealing ring and the groove for the sealing ring. The invention likely avoids that the gas-insulated electrical application needs to be disassembled or shut down early since the lifetime can be enhanced. Also, this protects gas from leaking. The invention provides a design widely applicable for GIS/GIL flanges with different diameters.

The gas-insulated switchgear may include an earthing switch, circuit-breaker, voltage converter and/or fast-action grounding device, e.g. including the two flanges and/or mounted by means of the two flanges.

The gas-insulated line may include a nominal conductor that is supported in an enclosure of the gas-insulated line. The enclosure may be substantially elongated e.g. along the axial direction, particularly sectionally pipe-shaped. The enclosure may include the flanges. The enclosure is filled or at least configured to be filled with insulating gas under pressure. The pressurized insulating gas creates a force that may act on the enclosure. The pressurized insulating gas is particularly present at least in part in the connection region.

Flanges of gas-insulated electrical applications are typically sealed with the help of the sealing ring, e.g. a gasket, a ring gasket, particularly an O-Ring. The sealing ring can be mechanically protected by the groove. The groove may be formed in part on a flange, e.g. a front end thereof, and on the insulator. The groove typically has have a ring shape corresponding to the sealing ring.

The gas-insulated electrical application may comprise at least one bolt or bolt connection, particularly a plurality thereof. The bolt(s) may connect the two flanges to one another.

The two flanges may constitute or may be a part of a flange connection of the gas-insulated electrical application. The flange connection may comprise the two flanges as two mating flanges, i.e. comprising substantially similar sizes. Particularly, the two flanges are connected to one another, thereby defining the connection region. The connection region includes, for example, the insulator. The two flanges may be arranged at respective ends of tubular sections of the electrical application, the tubular sections configured for containing a conductor surrounded by gas and held by the insulator. The tubular section can at least essentially form the enclosure.

The components of the electrical application defining and/or arranged in the connection region, particularly at least one of the two flanges and/or other components thereof like a cover and/or a tubular section, typically comprises or consists of an aluminum alloy. Bolt connections may extend through at least one of the two flanges, particularly through both of the two flanges. Typically, one or two of the sealing ring are arranged between the two flanges. Particularly, a spacer, e.g. in the form of a ring spacer, a clamping ring structure, particularly made of metal, may be arranged between the two flanges.

The gas-insulated electrical application may be configured for high voltages or medium voltage, e.g. may be a high voltage gas-insulated electrical application or a medium voltage gas-insulated electrical application. The term high voltage means preferably a voltage above 12 kV or 36 kV or 72 kV or 1100 kV. A high voltage preferably relates to nominal voltages in the range from above 12 kV, 36 kV or 72 kV to 550 kV or 1100 kV, like 145 kV, 245 kV or 420 kV, or even more. The term medium voltage means preferably a voltage above 1 kV or 12 kV or 36 kV. A medium voltage preferably relates to nominal voltages in the range from above 1 kV, 12 kV or 36 kV to 72 kV, like 5 kV, 10 kV, 25 kV or 70 kV.

The electrical application may contain gas, particularly insulating gas or dielectric gas. The insulating gas and/or dielectric insulation medium can be any suitable gas that enables to adequately extinguish the electric arc formed between contact elements during a current interruption operation, such as, but not limited, to an inert gas as, for example, sulphur hexafluoride SF6. Specifically, the insulating gas used can comprise SF6 gas, CO2 gas, N2 gas, or any other dielectric insulation medium and/or insulating gas, may it be gaseous and/or liquid, and in particular can be a dielectric insulation gas or arc quenching gas. Such dielectric insulation medium and/or insulating gas can for example encompass media comprising an organofluorine compound, such organofluorine compound being selected from the group consisting of: a fluoroether, an oxirane, a fluoroamine, a fluoroketone, a fluoroolefin, a fluoronitrile, and mixtures and/or decomposition products thereof. The insulating gas and/or dielectric insulation medium can be selected from the group consisting of: a hydrofluoroether, a perfluoroketone, a hydrofluoroolefin, a perfluoronitrile, and mixtures thereof.

The two flanges are connected to each other in the connection region. The connection region may be understood as a plane or substantially planar or flat region, e.g. at least including abutting faces of the flanges, the insulator, the sealing ring(s), a spacer and/or a clamping ring structure. The connection region may further include bolt(s) connecting the flanges.

The insulator may be a substantially solid structural piece, e.g. a monolithically formed piece. The insulator is typically electrically insulating, which is in contrast to the flanges which are typically electrically conductive. The insulator may be made of a polymer compound, a ceramic, a mixture thereof, or the like. The insulator may have a round outer section, particularly forming the annular base. The annular base may hold at least one structure or web configured to mount or hold a conductor. The insulator or annular base is typically held, e.g. clamped, between the two flanges in the connection region, e.g. in a floating manner by being kept at a respective distance to the flanges using the sealing ring or sealing rings. At least one gap, particularly annular gap, may be formed between the insulator and the flanges.

The annular base comprises one or two grooves. The grooves may be arranged on opposing sides of the annular base and/or may face away from one another. The groove or grooves may have a substantially constant cross section or shape along at least a section of the circumference of the annular base, particularly along the entire circumference of the annular base. It may be that there is at least one section along the circumference of the annular base with a shape different to the groove or grooves, e.g. for clamping the seal; there may be two or more sections of said at least one section, e.g. the two or more sections distributed along the circumference of the annular base.

The sealing ring is typically round or annular. It is understood that the sealing ring has the first side and the second side, which are typically substantially opposite to one another. The sides thus relate to a section of the sealing ring which may be round or annular. Typically, one of the sides is configured to be in contact to the insulator and the other one of the sides is configured to be in contact to one of the flanges.

The sealing ring is typically endless. The sealing ring may comprise a substantially constant cross section throughout its extension. For example, if laid on a flat surface, the sealing ring may assume a ring-like, particularly a circular or round form, particularly being in contact to the flat surface with one or two or more circular or round areas. As an example, an O-Ring known in the art is in contact to a flat surface, when laid thereon, with one circular or round area. The sealing ring having a recess on one of its sides may enable that the sealing ring can be in contact to such a flat surface, when laid or pressed thereon, with two circular or round areas that are radially adjacent to one another. The recess might form a cavity closed by said flat surface. A recess may be arranged on both sides of the sealing ring. Particularly, the sealing ring may have a similar or the same shape on both sides.

The groove can comprise two stepped edges which particularly can be arranged on opposite sides of the groove, typically considered in a radial direction. As an example, the radially outwards stepped edge is arranged farther away from a centrum of the annular base relative to the radially inwards edge. The radially outwards edge typically assumes a larger circumference than the radially inwards edge. The radially outwards edge typically assumes a larger extension in a radial direction than the radially inwards edge, i.e. is larger in width. The edges are preferably arranged substantially concentrical. Including the stepped edges, it may be understood that the groove is narrow in a bottom section relative to an upper section, with both sections covering the entire axial extension of the groove. The groove may be shaped to reduce in width from top to bottom. The groove may be shaped to comprise a smooth surface, e.g. without sharp angles or corners. Typically, the stepped edges include smooth or rounded transitions in order to protect the sealing ring. The smooth or rounded transitions ensure that the seal is not damaged during its compression between the flanges due to some too high strain and/or stress.

Upon development of the invention several features have been identified that may improve a sealing performance compared to a standard O-Ring with a circular cross section.

The sealing ring may have on each of the first side and the second side one of the recess. The recesses of the sealing ring may face away from one another.

The recess of the sealing ring may have a, particularly annular, concave shape. The concave shape may be evident in a cross section. For example, the recess may be curved to provide a smooth surface. The recess may include no steps or may be shaped step-free. A concave bottom of the recess may be formed with a radius of at least 0.5 mm, particularly at least 1.0 mm.

The sealing ring may comprise on at least one or on each of the first side and the second side at least one protrusion arranged adjacent to the recess, particularly two protrusions which may be arranged adjacent to the recess and/or which may surround the recess in a radial direction. The protrusion(s) may comprise a convex shape. The convex shape may be evident in a cross section. The protrusion(s) may transition step-free or smoothly with the particularly concave-shaped recess. Along an axial direction, and relative to an axial depth of the recess, the protrusions may have substantially the same height. The protrusion(s) may constitute a peak or outermost area of the sealing ring in an axial direction.

The sealing ring may comprise two imaginary geometric forms that comprise a circle, an ellipse, an ellipse-like form, an oval-like form, or a combination.

Particularly, the two imaginary geometric forms are circles or ellipses. The sealing ring may comprise the two imaginary geometric forms in that the forms are evident in a cross section or sectional view of the sealing ring.

The two imaginary geometric forms may have a similar size. The two imaginary geometric forms may overlap with one another. The contour sections of the two imaginary geometric forms that do not overlap with one another may at least substantially define the contour of the sealing ring, e.g. including the two protrusions and the recess, e.g. define the contour by at least 50 % or at least 65 % or at least 80 % or more of the length of the contour. The contour section of the two imaginary geometric forms that do overlap with one another may not define, e.g. may not be evident, in the contour of the sealing ring.

In other words, for example, the sealing ring may have a double-circular or double-ellipse shape in a sectional view. Such a design may provide that the two protrusions and the recess can be formed on both sides of the sealing ring in a substantially symmetrical manner. Additionally, the sealing ring may thereby have convex inner and outer faces that can provide smooth surface contact when the sealing ring is being deformed.

The imaginary geometric forms comprising an ellipse or two ellipses may include that the ellipse is arranged with its major axis oriented along an axial direction and/or with its minor axis oriented along a radial direction. In other words, for example, the ellipse is narrow/small in a radial direction and wide/stretched in an axial direction.

The ellipse may have a width-height-ratio of at least 0.3 and up to 0.9 or of at least 0.4 and up to 0.8. Particularly, the width-height-ratio is 0.6 ± 0.1 or 0.6 ± 10 %. Two ellipses may overlap by at least 5 % and up to 50 % of the width, particularly by at least 10 % and up to 20 %.

The sealing ring may have a plane of symmetry between the first side and the second side. The plane of symmetry may divide the sealing ring in two annular halves, meaning that the halves substantially have the same shape and volume.

The plane of symmetry may run through the centers of the two imaginary geometric forms and particularly through a radial width of the sealing ring.

An axial height of the sealing ring may equal at least 80 % and/or up to 120 % of a radial width of the sealing ring. For example, when the radial width is 10 mm, the axial height may be at least 8 mm and up to 12 mm. The radial width may be 11 mm ± 5 mm or 11 mm ± 10 %. The axial height may be 10 mm ± 5 mm or 10 mm ± 10 %.

The radial distance of the two protrusions or the centers of the two imaginary geometric forms may be chosen depending from the radial width of the sealing ring. For example, the radial distance may equal at least 40 % and/or up to 60 % of the radial width of the sealing ring. For example, when the radial width is 10 mm, the radial distance may be at least 4 mm and up to 6 mm. The radial distance may be 5 mm ± 3 mm or 5 mm ± 10%.

The sealing ring may comprise or consist of a monolithically shaped flexible material. For example, the material may be a polymer compound. The sealing ring may be free from structural elements, such as a metal ring or the like. Choosing a single type of material, particularly monolithically shaped, should enhance lifetime.

A lower section of the groove may have a width that is smaller than the radial width of the sealing ring for compressing the sealing ring. For example, it may be necessary to push the sealing ring into the groove, wherein the sealing ring thereby holds by way of friction from being slightly clamped or compressed. This can enable overhead assembly without the sealing ring falling out of an overhead groove.

The groove may have concave bottom edges facing the sealing ring. At least one of the bottom edges, particularly a radially inwards bottom edge, may comprise a radius that is equal to or larger than a respective radius on the sealing ring. Thereby, it can be realized that air pockets are avoided which could have an adverse effect on ageing.

The groove may have tapered sides. The tapered sides may provide a narrow bottom and a relatively wider upper section, which may enable that manufacture and cleaning of the groove is made easier. The tapered sides may transition towards the stepped edges continuously or step-free, especially by means of a radius defining a convex shape. This aims to realize that the sealing ring can smoothly deform into the stepped edges presumably with lower adverse material loads.

A depth of the groove may be smaller than an/the axial height of the sealing ring for compressing the sealing ring against one of the two flanges. The sealing ring may be configured to stick out of the groove during assembly to be compressed when getting in contact to the respective flange. The axial height, and other dimensions of the sealing ring, is/are typically considered in an uncompressed state.

The electrical application may include a clamping ring structure or spacer. The clamping ring structure may be arranged radially outside the insulator and in the connection region. The clamping ring structure may be arranged in direct contact to each of the two flanges, e.g. to hold the flanges at a distance. The clamping ring structure may be penetrated or pierced by bolts connecting the two flanges. The clamping ring structure may have an annular receptacle for the insulator. The receptacle may face towards the insulator, e.g. may face towards a radial direction, particularly to an inner direction. The clamping ring structure may be formed from one, two or more particularly annular pieces.

The objects are further solved by a sealing ring for a gas-insulated electrical application, particularly by a use of the sealing ring for the gas-insulated electrical application. The gas-insulated electrical application may comprise two flanges connected to each other in a connection region and an insulator with an annular base arranged in the connection region to be held by the two flanges and with a groove for the sealing ring. The sealing ring may comprise a recess on at least one of a first side and a second side of the sealing ring for facing at least the two flanges and the insulator. The sealing ring may be configured as described herein.

The objects are further solved by an insulator for a gas-insulated electrical application, particularly by a use of the insulator for the gas-insulated electrical application. The gas-insulated electrical application may comprise a sealing ring and two flanges. The two flanges may be connected to each other in a connection region with the insulator and the sealing ring to be arranged in the connection region and to be held by the two flanges. The insulator may have an annular base with a groove. The insulator may have the groove for the sealing ring for sealing against one of the two flanges. The groove may comprise stepped edges of which a radially outwards stepped edge is wider in a radial direction than a radially inwards stepped edge. The insulator may be configured as described herein.

The term 'or' may be replaced by 'and/or' throughout the present disclosure. As such, where 'or' is used, it is not necessarily meant that merely alternatives are named.

### Brief description of drawings

These and other aspects of the invention will be apparent from and elucidated with reference to the implementations described hereinafter.

In the drawings:
Fig. 1 shows a section of a gas-insulated electrical application in a connection region,
Fig. 2 shows a section of a gas-insulated electrical application in a connection region,
Fig. 3 shows a section of sealing ring of the gas-insulated electrical application of Fig. 2,
Fig. 4 shows details of a connection region of a gas-insulated electrical application, and
Fig. 5 shows a detail of the connection region of Fig. 4 additionally including a sealing ring that is deformed.

### Description of implementations

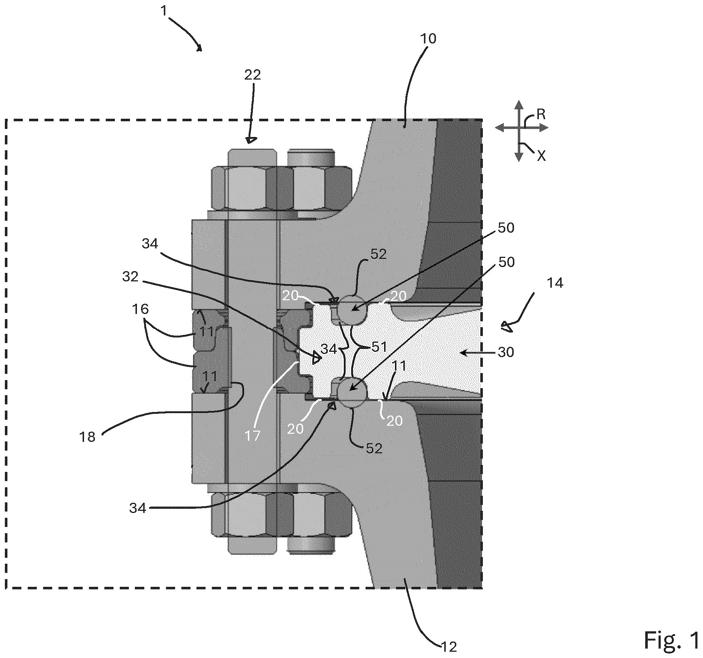

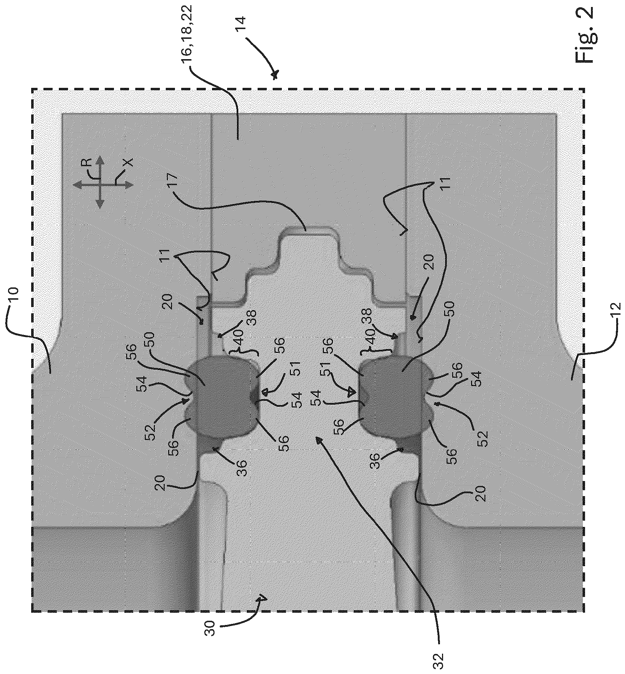

Fig. 1 and Fig. 2 show a section of a gas-insulated electrical application 1 that is a gas-insulated line (GIL). A conductor, not shown in detail, is supported by an insulator 30 and insulating gas is contained in the line.

Two substantially round or annular flanges 10, 12 are connected to each other in a connection region 14 by means of bolts 22. The connection region 14 is substantially annular and includes the insulator 30 and a clamping ring structure 16 or spacer pierced by the bolts 22 extending through holes 18 in the structure 16.

The flanges 10, 12 each include a substantially planar, particularly annular, flange face 11 that abuts with or is in, e.g. direct, contact to the clamping ring structure 16. The flange faces 11 are further arranged to face the insulator 30 and form gaps 20 between a respective flange face 11 and a respective side of the insulator 30.

Insulating gas may come through the gap 20 to get in touch with a sealing ring 50 on one side of the sealing ring 50.

The insulator 30 has an annular base 32 that is arranged in the connection region 14 between the two flanges 10, 12. The annular base 32 is held by the two flanges 10, 12 and not in direct contact to the flanges 10, 12 or the flange faces 11. Rather, the insulator 30 is held or supported indirectly by the two flanges 10, 12 in that two sealing rings 50 provide a substantially flexible support. In other words, the insulator 30 floats in the connection region 14 between the sealing rings 50.

Two sealing rings 50 are arranged with their first sides 51 in grooves 34 of the annular base 32, respectively, and configured for sealing with their second sides 52 against the respective flange 10 or 12 of the two flanges 10, 12. The two grooves 34 and the two sides 52, 54 face away from one another in an axial direction X.

The sealing rings 50 shown in Fig. 1 and Fig. 2 are shown for illustrative purposes in an uncompressed or undeformed state, causing a geometrical collision with the flanges 10, 12 and in Fig. 2 with the insulator 30. In practice, the sealing rings 50 would be compressed, particularly flattened along an axial direction X and the flanges 10, 12 keep the form of the faces 11 as shown, e.g. flat.

With respect to Fig. 2 it is shown that the sealing rings 50 comprise a particularly annular recess 54 on the first and the second sides 51, 52.

With respect to Fig. 2 it is shown that the grooves 34 comprise particularly annular stepped edges 36, 38 of which radially outwards stepped edges 38 are wider in a radial direction R than radially inwards stepped edges 36.

In Fig. 1, the recesses 54 and the stepped edges 36, 38 are not shown in detail.

The recesses 54 of the sealing rings 50 have concave shapes.

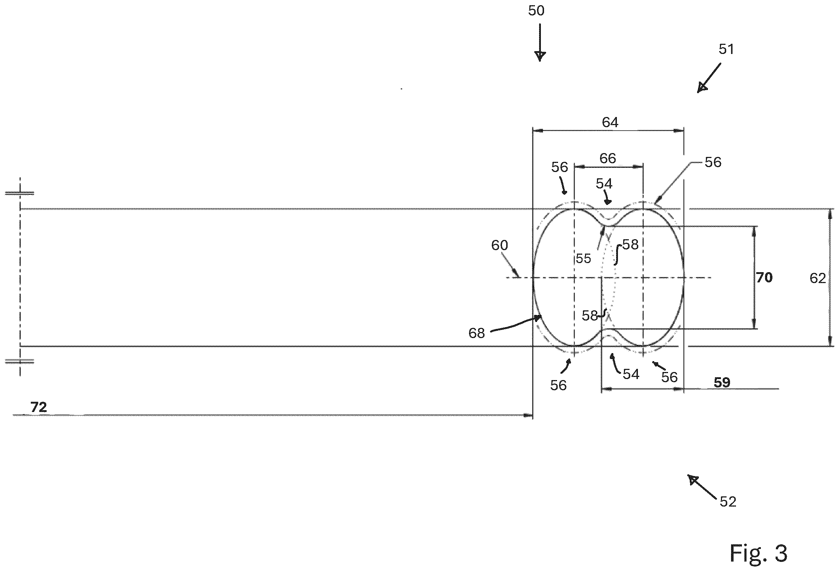

With respect to Fig. 3, the sealing rings 50 comprise on each of the first side 51 and the second side 52 two particularly annular protrusions 56 each of which are arranged adjacent to one recess 54, the two protrusions 56 comprising convex shapes.

With respect to Fig. 2, the sealing rings 50 are in contact to the insulator 30, particularly to a bottom 44 of the groove 34, with two circular or round areas.

With respect to Fig. 3, the recess 54 is defined by a radius 55 which is at least 0.5 mm and up to 1.5 mm, particularly the radius 55 is 1.05 mm ± 0.2 mm or 1.05 mm ± 10%, e.g. written as R1.05.

At least in an uncompressed or undeformed state, the sealing rings 50 have a double-ellipse shape, particularly cf. Fig. 2 and Fig. 3.

The sealing rings 50 comprise two imaginary geometric forms 58 that are ellipses, that have a similar size and that overlap with one another. The contour sections of the two imaginary geometric forms 58 that do not overlap with one another at least substantially define the contour of the sealing ring 50, cf. particularly Fig. 3.

The geometric forms 58 overlap in the inside of the sealing ring 50 as shown in Fig. 3 and drawn as dotted curved lines.

The sealing ring 50 has a plane of symmetry 60 between the first side 51 and the second side 52.

The axial height 62 of the sealing ring 50 equals between 80 % and 120 % of a radial width 64 of the sealing ring 50. The axial height 62 is 10 mm ± 0.15 mm. The radial width 64 is 11 mm ± 0.2 mm.

A radial distance 66 of the two protrusions 56 equals between 40 % and 60 % of the radial width 64. The radial distance 66 is 5 mm ± 0.2 mm. The radial distance 66 corresponds to the distance of the centers of the imaginary geometric forms 58.

The imaginary geometric forms 58 are wider in the axial direction X relative to the radial direction R. The width 59 in radial direction R is smaller than the axial height 62 in axial direction X.

A distance 70 between the lowest points of the recesses 54 in the axial direction X may be at least 50 % and/or up to 90 % of the axial height 62 of the sealing ring 50. Here, the distance 70 is at least 5 mm and/or up to 9 mm, particularly is 7.5 mm ± 0.2 mm or 7.5 mm ± 10 %.

An inner diameter 72 of the sealing ring 50 may be chosen depending on the size of the flanges 10, 12. For example, the inner diameter 72 may be at least 10 mm and/or up to 800 mm.

A depth of the recesses 54 in the axial direction may be 5 % to 20 % of the axial height 62. Here, the depth is at least 0.05 mm and/or up to 0.2 mm, particularly is 1.25 mm ± 0.25 mm or 1.25 mm ± 10%.

The sealing ring 50 consists of a monolithically shaped and/or flexible material. The sealing ring 50 consists of a substantially homogeneous single piece of material, particularly has no structural element like a metal ring and is endless.

The sealing ring 50 has a convex inner face and a convex outer face facing away from one another in the radial direction R.

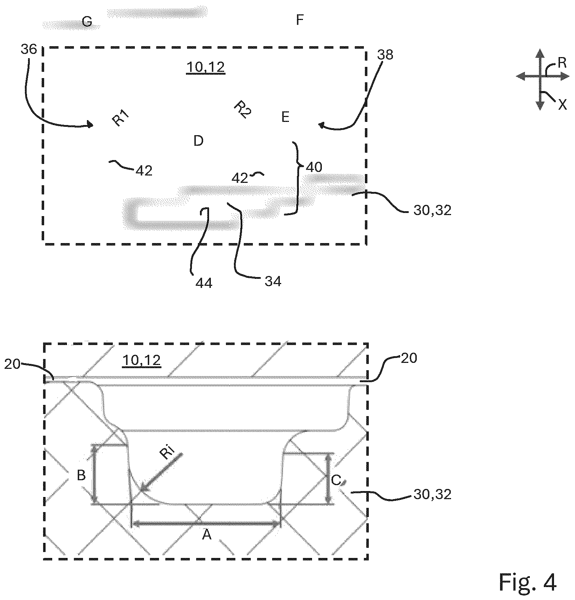

With reference to Fig. 4, a lower section 40 of the groove 34 has a width A that is smaller than the radial width 64 of the sealing ring 50 for compressing the sealing ring 50. The width A may be measured in a radial direction R and between lowest points of sides 42 of the groove 34, e.g. adjacent to roundings or bottom edges.

The groove 34 has concave bottom edges for facing and particularly contacting the sealing ring 50 and comprising a radius Ri that is equal to or larger than a respective radius 68 formed on the sealing ring 50.

The radius 68 of the sealing ring 50 may be in the range between half of the width 64 or the width 59 and half of the height 62 and, e.g. between 3 mm and 5 mm. The radius Ri may be arranged on a radially inwards side of the sealing ring 50.

The groove 34 has tapered sides 42 that transition towards the stepped edges 36, 38 continuously by means of a radius R1 and a radius R2, respectively, each of which define a convex shape. Particularly, radius R1 is smaller than radius R2, e.g. by at least 5 %.

Of the two tapered sides 42 a radially inwards side 42 and/or a radially outwards side 42 is/are tapered for the groove 34 to be smaller towards its bottom and wider towards its top.

The radially inwards side 42 is larger in height B relative to a height C of the radially outwards side 42, which is particularly due to the different choices of radius R1 and radius R2.

Relative to the axial direction X, one or both sides 42 are obliquely arranged, e.g. by an angle of at least 1 ° or at least 2° or at least 3° and/or up to 10° or up to 8° or up to 6°.

The radially inwards stepped edge 36 has a further side which is, for example, similarly tapered as one of the tapered sides 42 of the groove 34, e.g. so as to be parallel thereto, cf. Fig. 4. The further side has a radius at its top and transitions with a concave radius to the convexly shaped radius R1, e.g. so as to form a substantially curved step or edge.

The radially outwards stepped edge 38 has a further side which is, for example, similarly tapered as one of the tapered sides 42 of the groove 34, e.g. so as to be parallel thereto, cf. Fig. 4. The further side has a convex radius at its top and transitions with a concave radius to a bottom of the radially outwards stepped edge 38, the bottom being substantially flat.

A width F of the radially outwards stepped edge 38 is more than a width G of the radially inwards stepped edge 36, cf. Fig. 4.

A depth E of the radially outwards stepped edge 38 is less than 75 % of the depth D, particularly less than 50 % or the depth D, or is less than the distance in the axial direction X between the bottom of the radially outwards stepped edge 38 and the bottom 44 of the groove 34.

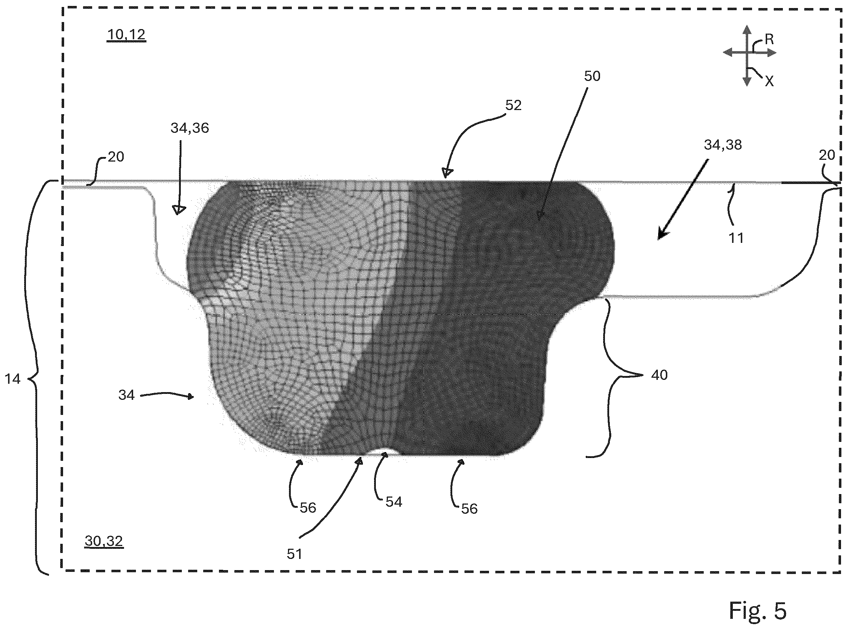

A depth D of the groove 34 is smaller, e.g. by at least 5 %, than the axial height 62 of the sealing ring 50 for compressing the sealing ring 50 against one of the two flanges 10, 12. It can be seen in Fig. 5 that the sealing ring 50 is compressed.

The groove 34 may have a substantially flat bottom adjacent to one or two bottom edges. The bottom may run in substantially parallel to the radial direction R.

The clamping ring structure 16 may have two pieces, cf. Fig. 1, in order to arrange the receptacle 17 around the insulator 30 during assembly.

The clamping ring structure 16 has a receptacle 17 that receives and surrounds the insulator 30. The receptacle 17 provides a form fit in the axial direction X.

The clamping ring structure 16 is arranged radially outside the insulator 30 and in the connection region 14. The clamping ring structure 16 is arranged in direct contact to each of the two flanges 10, 12 and is pierced by the bolts 20 connecting the two flanges 10, 12.

Shown and described is a use of a sealing ring 50 for a gas-insulated electrical application 1, the gas-insulated electrical application 1 comprising two flanges 10, 12 connected to each other in a connection region 14 and an insulator 30 with an annular base 32 arranged in the connection region 14 to be held by the two flanges 10, 12 and with a groove 34 for the sealing ring 50, wherein the sealing ring 50 comprises a recess 54 on at least one of a first side 51 and a second side 52 of the sealing ring 50 for facing at least one of the two flanges 10, 12 and the insulator 30.

Shown and described is a use of an insulator for a gas-insulated electrical application 1, the gas-insulated electrical application 1 comprising a sealing ring 50 and two flanges 10, 12 connected to each other in a connection region 14 with the insulator 30 and the sealing ring 50 to be arranged in the connection region 14 and to be held by the two flanges 10, 12, wherein
the insulator 30 has an annular base 32 with a groove 34,
the insulator 30 has the groove 34 for the sealing ring 50 for sealing against one of the two flanges 10, 12, and
the groove 34 comprises stepped edges 36, 38 of which a radially outwards stepped edge 38 is wider in a radial direction than a radially inwards stepped edge 36.

Typically, on a side of the sealing ring 50 facing the radially inwards stepped edge 36 an inner pressure of the gas-insulated electrical application 1 is present and on the side of the sealing ring 50 facing the radially outwards stepped edge 38 an atmospheric or ambient pressure is present. The inner pressure is typically higher than the atmospheric pressure so that the sealing ring 50 expands more towards the edge 38 than towards the edge 36. This is illustrated in Fig. 5.

### Reference signs list

- 1: gas-insulated electrical application
- 10: flange
- 12: flange
- 14: connection region
- 16: clamping ring structure
- 17: receptacle
- 18: hole
- 20: gap
- 22: bolt

- 30: insulator
- 32: annular base
- 34: groove
- 36: radially inwards stepped edge
- 38: radially outwards stepped edge
- 40: lower section
- 42: side
- 44: bottom
- A: width
- B: depth
- C: depth
- D: depth
- E: depth
- F: width
- G: width
- R1: radius (stepped edge)
- R2: radius (stepped edge)
- Ri: radius (bottom edge)

- 50: sealing ring
- 51: first side of the sealing ring
- 52: second side of the sealing ring
- 54: recess
- 55: radius
- 56: protrusion
- 58: imaginary geometric form
- 59: width of 58
- 60: plane of symmetry
- 62: axial height
- 64: radial width
- 66: radial distance
- 68: radius
- 70: distance
- 72: diameter

- X: axial direction
- R: radial direction

## Claims

1. Gas-insulated electrical application (1), particularly gas-insulated switchgear or gas-insulated line, comprising
two flanges (10, 12) connected to each other in a connection region (14),
an insulator (30) with an annular base (32) arranged in the connection region (14) to be held by the two flanges (10, 12), and
a sealing ring (50) arranged with a first side (51) in a groove (34) of the annular base (32) and configured for sealing with a second side (52) against one of the two flanges (10, 12), wherein
the sealing ring (50) comprises a recess (54) on at least one of the first side (51) and the second side (52), and/or
the groove (34) comprises stepped edges (36, 38) of which a radially outwards stepped edge (38) is wider in a radial direction than a radially inwards stepped edge (36).

2. Gas-insulated electrical application (1) according to the preceding claim, wherein the recess (54) of the sealing ring (50) has a concave shape.

3. Gas-insulated electrical application (1) according to one of the preceding claims, wherein
the sealing ring (50) comprises on each of the first side (51) and the second side (52) two protrusions (56) each of which is arranged adjacent to the recess (54), the two protrusions (56) comprising convex shapes.

4. Gas-insulated electrical application (1) according to claim 3,
the sealing ring (50) comprising two imaginary geometric forms (58) that are circles or ellipses, that have a similar size and that overlap with one another, wherein the contour sections of the two imaginary geometric forms (58) that do not overlap with one another at least substantially define the contour of the sealing ring (50).

5. Gas-insulated electrical application (1) according to one of the preceding claims, wherein
the sealing ring (50) has a plane of symmetry (60) between the first side (51) and the second side (52).

6. Gas-insulated electrical application (1) according to one of the preceding claims,
wherein an axial height (62) of the sealing ring (50) equals at least 80 % and up to 120 % of a radial width (64) of the sealing ring (50), and/or
wherein a radial distance (66) of the two protrusions (56) equals at least 40 % and up to 60 % of a/the radial width (64) of the sealing ring (50).

7. Gas-insulated electrical application (1) according to one of the preceding claims, wherein a/the radial width (64) of the sealing ring (50) is 11 ± 5 mm.

8. Gas-insulated electrical application (1) according to one of the preceding claims, wherein the sealing ring (50) consists of a monolithically shaped flexible material.

9. Gas-insulated electrical application (1) according to one of the preceding claims, wherein
a lower section (40) of the groove (34) has a width (A) that is smaller than a/the radial width (64) of the sealing ring (50) for compressing the sealing ring (50).

10. Gas-insulated electrical application (1) according to one of the preceding claims, wherein
the groove (34) has concave bottom edges facing the sealing ring (50) and comprising a radius (Ri) that is equal to or larger than a respective radius (68) on the sealing ring.

11. Gas-insulated electrical application (1) according to one of the preceding claims, wherein
the groove (34) has tapered sides (42) and the tapered sides (42) transition towards the stepped edges (36, 38) continuously, especially by means of a radius (R1, R2) defining a convex shape.

12. Gas-insulated electrical application (1) according to one of the preceding claims, wherein
a depth (D) of the groove (34) is smaller than an/the axial height (62) of the sealing ring (50) for compressing the sealing ring (50) against one of the two flanges (10, 12).

13. Gas-insulated electrical application (1) according to one of the preceding claims and comprising a clamping ring structure (16) arranged radially outside the insulator (30) and in the connection region (14), the clamping ring structure (16) arranged in direct contact to each of the two flanges (10, 12) and pierced by bolts (22) connecting the two flanges (10, 12).

14. Use of a sealing ring for a gas-insulated electrical application (1), the gas-insulated electrical application (1) comprising two flanges (10, 12) connected to each other in a connection region (14) and an insulator (30) with an annular base (32) arranged in the connection region (14) to be held by the two flanges (10, 12) and with a groove (34) for the sealing ring (50), wherein
the sealing ring (50) comprises a recess (54) on at least one of a first side (51) and a second side (52) of the sealing ring (50) for facing at least one of the two flanges (10, 12) and the insulator (30).

15. Use of an insulator for a gas-insulated electrical application (1), the gas-insulated electrical application (1) comprising a sealing ring (50) and two flanges (10, 12) connected to each other in a connection region (14) with the insulator (30) and the sealing ring (50) to be arranged in the connection region (14) and to be held by the two flanges (10, 12), wherein
the insulator (30) has an annular base (32) with a groove (34),
the insulator (30) has the groove (34) for the sealing ring (50) for sealing against one of the two flanges (10, 12), and
the groove (34) comprises stepped edges (36, 38) of which a radially outwards stepped edge (38) is wider in a radial direction than a radially inwards stepped edge (36).
